# DEMANDE DE BREVET EUROPEEN

(11) **EP 2 923 872 A1**
(43) Date de publication de la demande: **30.09.2015**
(21) Numéro de dépôt: 15154382.4
(22) Date de dépôt: 09.02.2015
(51) Int. Cl.: B60K 13/04, F01N 13/00, F01N 13/14

(54) **Ensemble pour châssis de véhicule automobile à double écrans de protection thermique**

(30) Priorité: 24.03.2014 FR 1452436
(71) Demandeur: PEUGEOT CITROËN AUTOMOBILES SA, 78140 Vélizy-Villacoublay (FR)
(72) Inventeur: Convers, Germain, 25200 Béthoncourt (FR); Le Bars, Franck, 25200 Montbeliard (FR); Robert, Pascal, 25550 Bavans (FR); Morlot, Lionel, 70200 Frotey les Lure (FR); Bouvrot, Frederic, 25150 Bourguignon (FR)

(57) **Abrégé**

L'invention porte principalement sur un ensemble (1) pour châssis de véhicule automobile comportant un plancher (2) de véhicule sous lequel est montée une ligne d'échappement (3), un premier écran (10) de protection thermique, dit écran principal, positionné le long de ladite ligne d'échappement (3), et une sonde de mesure (13), caractérisé en ce que ledit écran principal (10) étant ajouré, l'ensemble comporte en outre un deuxième écran (11) de protection thermique, dit écran secondaire, fixé par ladite sonde de mesure sur ladite ligne échappement (3), ledit écran secondaire (11) venant en recouvrement avec ledit écran principal (10) de manière à protéger ledit plancher (2) vis-à-vis de radiations émises par ladite ligne d'échappement (3).

## Description

La présente invention porte sur un ensemble pour châssis de véhicule automobile à double écrans de protection thermique.

De façon connue en soi, un ensemble pour châssis de véhicule automobile comporte un plancher s'étendant sensiblement le long du véhicule. Un tunnel aménagé dans le plancher est conformé pour recevoir une ligne d'échappement des gaz brûlés durant la combustion dans le moteur thermique.

Un écran de protection thermique est positionné le long de la ligne d'échappement entre la ligne d'échappement et le tunnel. Par ailleurs, une sonde de mesure d'oxydes d'azote utilisée avec le système de réduction catalytique sélective des NOX (également connu sous l'acronyme anglais SCR pour « Sélective Catalytic Réduction »), dite sonde NOx, est implantée de préférence perpendiculairement au flux de gaz sous l'écran thermique.

Dans le cas où un renfort est implanté sous caisse afin de répondre à de nouvelles normes relatives à l'absorption des chocs latéraux, il est nécessaire de reculer la sonde. Or, la hauteur du tunnel étant généralement réduite en partie arrière du véhicule pour augmenter l'espace disponible pour les passagers, le positionnement de la sonde devient problématique dans la mesure où il n'est plus possible de positionner la sonde sous l'écran thermique.

Le document DE-10306412 décrit l'utilisation d'un écran de protection thermique visant à protéger une sonde de mesure des radiations d'une partie de l'échappement. Toutefois, la configuration décrite ne permet pas d'intégrer la sonde de mesure en partie arrière du châssis dans une zone de hauteur de tunnel réduite, tout en protégeant l'environnement du rayonnement direct de la ligne d'échappement.

L'invention vise à remédier efficacement à cet inconvénient en proposant un ensemble pour châssis de véhicule automobile comportant un plancher de véhicule sous lequel est montée une ligne d'échappement, un premier écran de protection thermique, dit écran principal, positionné le long de ladite ligne d'échappement, et une sonde de mesure, tel que ledit écran principal étant ajouré, l'ensemble comporte en outre un deuxième écran de protection thermique, dit écran secondaire, fixé par ladite sonde de mesure sur ladite ligne échappement, ledit écran secondaire venant en recouvrement avec ledit écran principal de manière à protéger ledit plancher vis-à-vis de radiations (thermiques) émises par ladite ligne d'échappement.

Dans une telle configuration, la sonde de mesure peut traverser l'écran principal via l'ouverture ménagée dans cet écran, ce qui permet d'installer la sonde de mesure dans la zone du plancher située sous les passagers arrière où le tunnel présente une hauteur réduite. L'invention permet également de protéger l'environnement du rayonnement direct de l'échappement.

Selon une réalisation, l'écran secondaire recouvre, sans contact, ledit écran principal.

Selon une réalisation, il existe un jeu entre ladite sonde de mesure et ledit écran principal. Cela permet de préserver la sonde de mesure d'une détérioration en évitant que ces deux éléments entrent en contact en cas de vibrations.

Selon une réalisation, ledit écran secondaire est fixé par ladite sonde de mesure sur ladite ligne d'échappement par entretoisement.

Selon une réalisation, ledit écran secondaire est monté à distance de ladite ligne d'échappement. On crée ainsi une lame d'air qui améliore la protection thermique contre les radiations. En outre, l'espace entre l'écran secondaire et la ligne d'échappement vise à éviter les nuisances sonores en évitant que ces deux pièces puissent entrer en contact en cas de vibrations.

Selon une réalisation, ledit écran secondaire est une tôle emboutie.

Selon une réalisation, ledit écran secondaire est configuré pour éviter de tourner au montage de ladite sonde de mesure.

Selon une réalisation, ledit écran secondaire présente une forme circulaire et symétrique.

Selon une réalisation, ledit ensemble comporte un tunnel de passage de ladite ligne d'échappement aménagé dans ledit plancher.

Selon une réalisation, ledit ensemble comporte une pièce de renfort apte à limiter une déformation dudit tunnel en cas de choc.

Selon une réalisation, ladite ligne d'échappement est montée sur un système d'amortissement de vibrations.

Selon une réalisation, ladite sonde de mesure est une sonde de mesure d'une quantité d'oxydes d'azote.

L'invention sera mieux comprise à la lecture de la description qui suit et à l'examen des figures qui l'accompagnent. Ces figures ne sont données qu'à titre illustratif mais nullement limitatif de l'invention.

La figure 1 représente une vue en perspective du montage de la sonde de mesure sur la ligne d'échappement appartenant à l'ensemble pour châssis de véhicule automobile selon la présente invention;

Les figures 2a et 2b sont respectivement des vues de face et de côté de l'ensemble pour châssis de véhicule automobile selon la présente invention.

Les éléments identiques, similaires, ou analogues conservent la même référence d'une figure à l'autre.

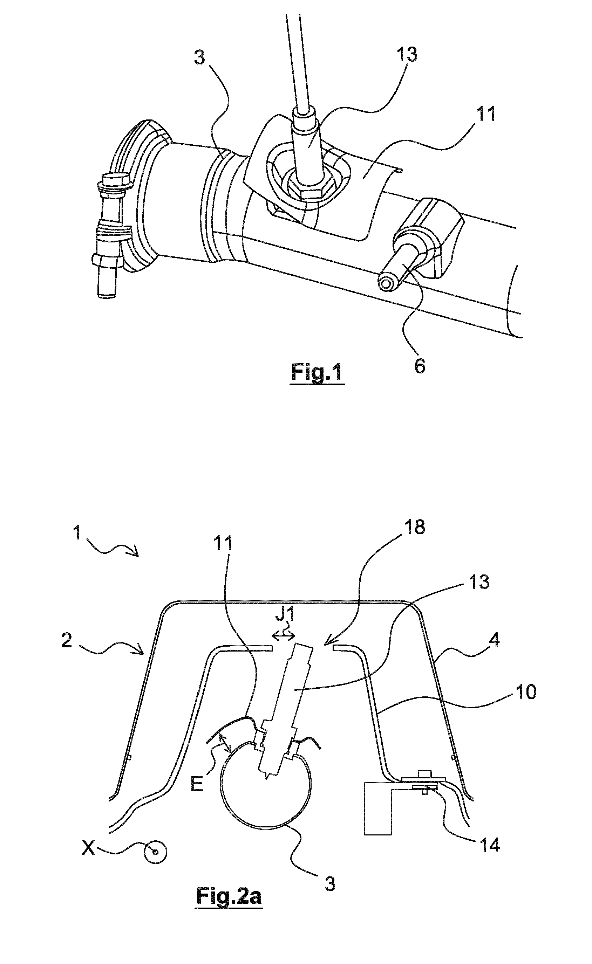

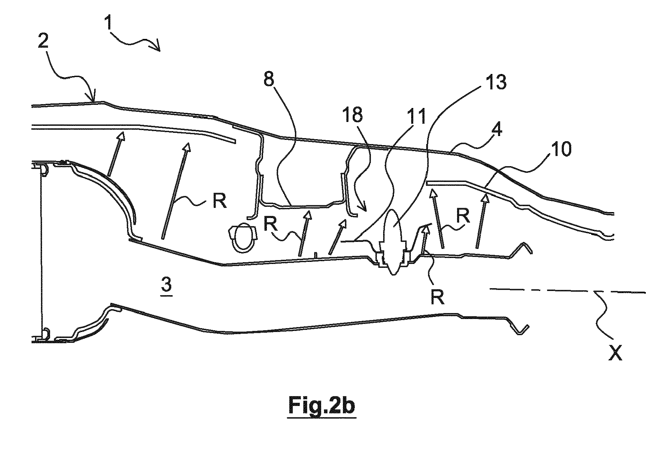

Les figures 2a et 2b montrent un ensemble 1 pour châssis de véhicule automobile comportant un plancher 2 de véhicule automobile s'étendant sensiblement le long du véhicule suivant un axe longitudinal X.

Un tunnel 4 aménagé dans le plancher 2 est conformé pour recevoir une ligne d'échappement 3 des gaz brûlés durant la combustion dans le moteur thermique. Cette ligne d'échappement 3 comprend notamment un conduit d'échappement et des catalyseurs appartenant par exemple à un système de type SCR permettant de réduire chimiquement les oxydes d'azote présents dans les gaz d'échappement. Le tunnel 4 présente une section transversale sensiblement en forme de U inversé. Dans la partie arrière du véhicule où la sonde 13 est implantée, le tunnel 4 présente une hauteur réduite afin de maximiser l'espace disponible pour les passagers.

La ligne d'échappement 3 est de préférence montée sur un système d'amortissement des vibrations appelé aussi selon la terminologie anglaise "silent bloc". A cet effet, la ligne d'échappement 3 est équipée de pions transversaux 6 dont un est visible à la figure 1 destinés à venir se loger dans des pièces élastiques solidaires du plancher 2 réalisées par exemple en élastomère.

Par ailleurs, comme on peut le voir à la figure 2b, une pièce de renfort 8 est montée sur la structure pour limiter la déformation du tunnel 4 et assurer une diffusion des efforts en cas de choc.

Un premier écran 10 de protection thermique, dit écran principal, est positionné le long de la ligne d'échappement 3 entre la ligne d'échappement 3 et le tunnel 4. L'écran principale 10 présente une forme correspondant à celle de tunnel 4 en sorte qu'il présente lui aussi une section transversale sensiblement en forme de U inversé. L'écran principal 10 est fixé de part et d'autre du tunnel 4 à l'aide de moyens d'attache 14 de type connu dont un seul est visible sur la figure 2a. L'écran principal 10 est ajouré dans une zone 18 pour autoriser le passage d'une sonde de mesure 13 d'oxydes d'azote utilisée avec le système SCR, dite sonde NOx. La zone ajourée 18 est réalisée dans le fond de l'écran 10 reliant les branches d'extrémité du U.

La sonde 13 est implantée de préférence perpendiculairement au flux de gaz d'échappement. En variante, la sonde 13 pourra être de toute autre nature comme par exemple une sonde de mesure de pression ou une sonde de mesure de température.

Il existe un jeu J1 entre la sonde de mesure 13 et l'écran principal 10 afin de préserver la sonde 13 d'une détérioration en évitant que ces deux éléments entrent en contact en cas de vibrations. Le jeu J1 est en particulier prévu suivant l'axe longitudinal X pour compenser le fait que la ligne d'échappement 3 a tendance à s'allonger suivant l'axe X sous l'effet de la chaleur. Ce jeu J1 est d'au moins 20mm.

En outre, un écran secondaire 11 est fixé par la sonde de mesure 13 sur la ligne échappement 3, de préférence par entretoisement. L'écran secondaire 11 est positionné à distance (cf. écart E sur la figure 2a) de la ligne d'échappement 3 de manière à créer une lame d'air qui améliore la protection thermique contre les radiations représentées par les flèches R sur la figure 2b. En outre, l'espace entre l'écran secondaire 11 et la ligne d'échappement 3 vise à éviter les nuisances sonores en évitant que ces deux pièces 3, 11 puissent entrer en contact en cas de vibrations.

L'écran secondaire 11 vient en recouvrement avec l'écran principal 10 fixé sous caisse de manière à protéger le plancher 2 vis-à-vis des radiations R émises par la ligne d'échappement 3. Le recouvrement entre l'écran secondaire 11 et l'écran principal 10 est effectué sans contact entre ces deux éléments 10, 11.

Dans le cas où l'écran secondaire 11 présente une forme asymétrique particulière comme c'est le cas à la figure 1, l'écran 11 est configuré pour éviter de tourner au serrage de la sonde de mesure 13. Afin de garantir le maintien en position de l'écran secondaire 11 lors du serrage, on prévoit alors que des portions de l'écran secondaire 11 puissent venir en appui contre une zone fixe issue de l'échappement.

Alternativement, l'écran secondaire 11 pourra présenter une forme circulaire et symétrique, en sorte que sa rotation au moment du montage ne sera pas problématique. En outre, cela facilite sa reconduction sur d'autres configurations d'échappement.

Le choix de la forme de l'écran secondaire 11 (circulaire et symétrique ou asymétrique avec un système d'anti-rotation) dépend de l'application envisagée et de la configuration sous caisse du véhicule.

L'écran secondaire 11 prend de préférence la forme d'une tôle emboutie. L'écran principal 10 est réalisé par exemple en aluminium ou en feutre résiné.

Dans une telle configuration, la sonde de mesure 13 peut traverser l'écran principal 10 via l'ouverture 18 réalisée dans l'écran principal 10, ce qui permet d'installer la sonde de mesure 13 dans la zone du plancher 2 située sous les passagers arrière où le tunnel 4 présente une hauteur réduite. L'invention permet également de protéger thermiquement l'environnement des rayonnements directs de l'échappement.

L'invention permet ainsi de monter la sonde de mesure 13 sur la ligne d'échappement 3 avant la mise en place de l'échappement. Aucune action de reprise de l'écran principal 10 ou de l'écran secondaire 11 n'est nécessaire après la mise en place de l'échappement.

En variante, le plancher 2 est plat et dépourvu de tunnel 4.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Ensemble (1) pour châssis de véhicule automobile comportant un plancher (2) de véhicule sous lequel est montée une ligne d'échappement (3), un premier écran (10) de protection thermique, dit écran principal, positionné le long de ladite ligne d'échappement (3), et une sonde de mesure (13), **caractérisé en ce que** ledit écran principal (10) étant ajouré, l'ensemble comporte en outre un deuxième écran (11) de protection thermique, dit écran secondaire, fixé par ladite sonde de mesure sur ladite ligne échappement (3), ledit écran secondaire (11) venant en recouvrement avec ledit écran principal (10) de manière à protéger ledit plancher (2) vis-à-vis de radiations (R) émises par ladite ligne d'échappement (3).

2. Ensemble selon la revendication 1, **caractérisé en ce que** l'écran secondaire (11) recouvre, sans contact, ledit écran principal (10).

3. Ensemble selon la revendication 1 ou 2, **caractérisé en ce qu'**il existe un jeu (J1) entre ladite sonde de mesure (13) et ledit écran principal (10).

4. Ensemble selon l'une quelconque des revendications 1 à 3, **caractérisé en ce que** ledit écran secondaire (11) est fixé par ladite sonde de mesure (13) sur ladite ligne d'échappement (3) par entretoisement.

5. Ensemble selon l'une quelconque des revendications 1 à 4, **caractérisé en ce que** ledit écran secondaire (11) est monté à distance de ladite ligne d'échappement.

6. Ensemble selon l'une quelconque des revendications 1 à 5, **caractérisé en ce que** ledit écran secondaire (11) est une tôle emboutie.

7. Ensemble selon l'une quelconque des revendications 1 à 6, **caractérisé en ce que** ledit écran secondaire (11) est configuré pour éviter de tourner au montage de ladite sonde de mesure (13).

8. Ensemble selon l'une quelconque des revendications 1 à 6, **caractérisé en ce que** ledit écran secondaire (11) présente une forme circulaire et symétrique.

9. Ensemble selon l'une quelconque des revendications 1 à 8, **caractérisé en ce qu'**il comporte un tunnel (4) de passage de ladite ligne d'échappement (3) aménagé dans ledit plancher (2).

10. Ensemble selon la revendication 9, **caractérisé en ce qu'**il comporte une pièce de renfort (8) apte à limiter une déformation dudit tunnel (4) en cas de choc.

11. Ensemble selon l'une quelconque des revendications 1 à 10, **caractérisé en ce que** ladite ligne d'échappement (3) est montée sur un système d'amortissement de vibrations.

12. Ensemble selon l'une quelconque des revendications 1 à 11, **caractérisé en ce que** ladite sonde de mesure (13) est une sonde de mesure d'une quantité d'oxydes d'azote.
